(19) Europäisches Patentamt
European Patent Office
Office européen des brevets

(11) **EP 2 946 647 B1**

(12) **EUROPÄISCHE PATENTSCHRIFT**

(45) Veröffentlichungstag und Bekanntmachung des Hinweises auf die Patenterteilung:
**05.04.2017   Patentblatt 2017/14**

(51) Int Cl.:
**A01B 59/06** *(2006.01)*     **G01G 19/08** *(2006.01)*

(21) Anmeldenummer: **15168636.7**

(22) Anmeldetag: **21.05.2015**

(54) **VERFAHREN ZUR KALIBRIERUNG EINER KRAFTMESSEINRICHTUNG**

METHOD FOR CALIBRATING A FORCE MEASURING DEVICE

PROCÉDÉ D'ÉTALONNAGE D'UN DISPOSITIF DE MESURE DE FORCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2014   DE 102014209696**

(43) Veröffentlichungstag der Anmeldung:
**25.11.2015   Patentblatt 2015/48**

(73) Patentinhaber: **Deere & Company**
**Moline, IL 61265 (US)**

(72) Erfinder:
• **Kremmer, Martin**
  **68163 Mannheim (DE)**
• **Ballaire, Frederic**
  **67434 Neustadt (DE)**

(74) Vertreter: **John Deere GmbH & Co. KG**
**Global Intellectual Property Services**
**John-Deere-Straße 70**
**68163 Mannheim (DE)**

(56) Entgegenhaltungen:
**EP-A1- 0 407 705     US-A1- 2008 110 647**
**US-B1- 6 534 728**

## Beschreibung

Die Erfindung betrifft ein Verfahren zur Kalibrierung einer Kraftmesseinrichtung, mittels der eine Lagerlast $G_1$ in einem Stützlager eines Unterlenkers eines Dreipunktkrafthebers eines landwirtschaftlichen Arbeitsfahrzeugs bestimmbar ist.

Landwirtschaftliche Arbeitsfahrzeuge werden als Traktoren heute in der Landwirtschaft für verschiedene Arbeiten mit unterschiedlichen Anbaugeräten bestückt. Die Anbaugeräte können an den Dreipunktkraftheber eines Traktors angehängt werden. Für die Bedienperson des Traktors ist es grundsätzlich wichtig, Kenntnis von der Masse des Anbaugeräts zu haben und zwar sowohl von der Masse des Anbaugeräts an sich als auch von einer Masse einer Füllung des Anbaugeräts einschließlich einer Veränderung der Füllung während des Betriebs. Eine Kenntnis dieser Masse ist wichtig, um aus Fahrstabilitätsgründen Mindestvorderachslasten nicht zu unterschreiten, sofern denn das Anbaugerät an den Dreipunktkraftheber am Traktorheck angebracht ist. Andererseits dürfen aber auch maximal zulässige Achslasten an der Vorderachse und der Hinterachse nicht überschritten werden. Schließlich ist aus betriebstechnischen Gründen bei Anbaugeräten, die mit Streugut, Dünger, Saatgut oder ähnlichen Materialien gefüllt sind, eine Kenntnis der angebauten Masse und deren Veränderung während des Betriebs von Bedeutung. Auch bei Anbaugeräten, mit denen Transportoperationen durchgeführt werden, ist eine Kenntnis über sich verändernde Massen zweckmäßig. Zu nennen sind hier Hecklader, Ballengabeln oder Siloblockschneider. Nur durch Kenntnis dieser Massen und ihrer Veränderung ist eine Aussage möglich, welche Gesamtmasse beispielsweise eines Streuguts oder an Ballen während eine Betriebszyklus verteilt beziehungsweise transportiert wurde.

Im Stand der Technik werden zur Gewichtsmessung unter anderem statische Radlastwaagen eingesetzt. Aus der Differenz der Masse des leeren Traktors zu der Masse des vollen Traktors kann die Masse der verarbeiteten Ladung bestimmt werden. Solche Messungen sind ungenau und nicht für eine dynamische Erfassung von zyklisch stattfindenden Ladevorgängen geeignet. Zur dynamischen Gewichtsmessung sind sogenannte Wiegerahmen bekannt, die zwischen Dreipunktkraftheber und Anbaugerät angeordnet werden, das heißt als verbindendes Glied zwischen beiden fungieren. Hierdurch wird zunächst der Schwerpunkt des Anbaugeräts nach hinten verlagert, was zu einer Verringerung der zur Verfügung stehenden Hubkraft des Dreipunktkrafthebers führt aber auch der Fahrstabilität des Schleppers abträglich ist. Schließlich ist nicht zu vernachlässigen, dass die Wiegerahmen an sich stabil und schwer ausgeführt sind, um Anbaugerätegewichte bis zur Hubkraftgrenze in der Koppelebene tragen zu können.

EP0407705A1 offenbart eine Traktorwaage zum Erfassen des Gewichtes eines Anbaugerätes.

Voraussetzung einer dynamischen Gewichtsmessung ist zunächst eine Kraftmesseinrichtung, mit der eine Lagerkraft in dem Stützlager des Unterlenkers des Dreipunktkrafthebers an dem Schlepper gemessen werden kann. Für reproduzierbare und unter verschiedenen Winkelpositionen des Dreipunktkrafthebers und des Schleppers vorgenommene Gewichtsmessungen ist wiederum eine Kalibrierung der Kraftmesseinrichtung des Stützlagers unerlässlich.

Ausgehend hiervon besteht die Aufgabe der vorliegenden Erfindung darin ein Verfahren zur Kalibrierung eines Unterlenkerstützlagers eines Dreipunktkrafthebers bereitzustellen. Die Aufgabe wird gelöst durch ein Verfahren zur Kalibrierung einer Kraftmesseinrichtung, mittels der eine Lagerlast $G_1$ in einem Stützlager eines Unterlenkers eines Dreipunktkrafthebers eines landwirtschaftlichen Arbeitsfahrzeugs bestimmbar ist, bei dem gemessene Ausgangsspannungen $U_L$ der Kraftmesseinrichtung und in Abhängigkeit eines an den Unterlenker angehängten und eine definierte Nutzlast repräsentierenden Gewichts bei zumindest zwei Winkelpositionen des Unterlenkers bestimmte Lagerlasten $G_1$ in einen funktionalen Zusammenhang gesetzt werden.

Hierbei sollen unten den Ausgangsspannungen der Kraftmesseinrichtung elektrische Signale verstanden werden, die durch die Kraftmesseinrichtung erzeugt werden, sobald sie eine Lagerlast in dem Stützlager registriert. Bevorzugt ist die Masse des an den Unterlenker angehängten Gewichts hinreichend genau bekannt, so dass es als Prüfgewichts fungieren kann. Weiterhin ist vorgesehen, dass das Gewicht lediglich durch den Unterlenker gehalten ist und zu keinem anderen Bauteil oder dem Boden Kontakt hat. Unter einem funktionalen Zusammenhang zwischen der Ausgangsspannung $U_L$ und den Lagerlasten $G_1$ in zwei Winkelpositionen des Unterlenkers soll eine Funktion oder eine Kennlinie der Lagerlast $G_1$ bezogen auf die Ausgangsspannung $U_L$ verstanden werden, was sich als $G_1=f(U_L)$ ausdrücken lässt.

Bei dem erfindungsgemäßen Verfahren ist von Vorteil, dass die Kraftmesseinrichtung in einen eingebauten Zustand kalibriert werden kann. Lediglich das Anhängen eines in seiner Masse bekannten Gewichts und das Durchführen des Kalibrierverfahrens sind erforderlich.

Bevorzugt wird die Lagerlast $G_1$ mittels des Betrags und der Wirkungsrichtung der Gewichtskraft $F_G$ der Nutzlast, der parallel zur dem Unterlenker wirkenden Komponente der Stangenkraft $F_S$ einer Hubspindel des Dreipunktkrafthebers und den Hebelverhältnissen des Unterlenkers bezogen auf das Stützlager bestimmt. Hierdurch ist eine einfache Berechnung der Lagerlast $G_1$ gewährleistet.

Bevorzugt wird die Wirkungsrichtung der Gewichtskraft $F_G$ mittels eines Neigungssensors bestimmt. Ein derartiger Sensor ist kostengünstig bereitzustellen.

Bevorzugt wird die Lagerlast $G_1$ mittels der Gleichung

$$G_1 = \sqrt{(F_{\text{Sparallel}} + F_G * sin\varphi_{\text{UFG}})^2 + (F_G * cos\varphi_{\text{UFG}} * \frac{l_U - l_1}{l_1})^2}$$

bestimmt, wobei

| | |
|---|---|
| $F_{\text{Sparallel}}$ | die parallel zur dem Unterlenker wirkenden Komponente der Stangenkraft $F_S$ der Hubspindel, |
| $F_G$ | der Betrag der Gewichtskraft $F_G$ der Nutzlast, |
| $\varphi_{\text{UFG}}$ | Winkel der Wirkungsrichtung der Gewichtskraft $F_G$ bezogen auf eine Senkrechte zu dem Unterlenker, |
| $l_u$ | Länge des Unterlenkers in der x-z-Ebene und |
| $l_1$ | Abstand vom dem Stützlager des Unterlenkers zu dem Anlenkpunkt der Hubspindel an dem Unterlenker sind. |

Bevorzugt wird die Komponente $F_{\text{Sparallel}}$ der Stangenkraft $F_S$ aus dem hydraulischen Druck in einem Hydraulikzylinder, der Winkelposition $\varphi_H$ des Hubarms, einem Abstand $l_1$ des Stützlagers von einem Anlenkpunkt der Hubspindel an den Unterlenker und der Länge $l_H$ der Hubspindel ermittelt. Hierdurch ist eine einfache Berechnung der Komponente $F_{\text{Sparallel}}$ der Stangenkraft $F_S$ gewährleistet.

Bevorzugt wird die Winkelposition $\varphi_H$ des Hubarms mittels eines ersten Lagesensors bestimmt. Ein derartiger Sensor ist kostengünstig bereitzustellen.

Bevorzugt umfasst die Kraftmesseinrichtung einen Kraftmessbolzen oder Biegestab.

Bevorzugt wird die Winkelposition des Unterlenkers mittels eines zweiten Lagesensors bestimmt. Ein derartiger Sensor ist kostengünstig bereitzustellen.

Das erfindungsgemäße Verfahren zur Kalibrierung einer mittels einer Kraftmesseinrichtung bestimmten Lagerlast $G_1$ wird anhand der nachfolgenden Figuren beschrieben.

Hierin zeigen

Figur 1    landwirtschaftliches Arbeitsfahrzeug mit einem Dreipunktkraftheber und

Figur 2    Unterlenker mit infolge eines angehängten Prüfgewichts angreifenden Kräften.

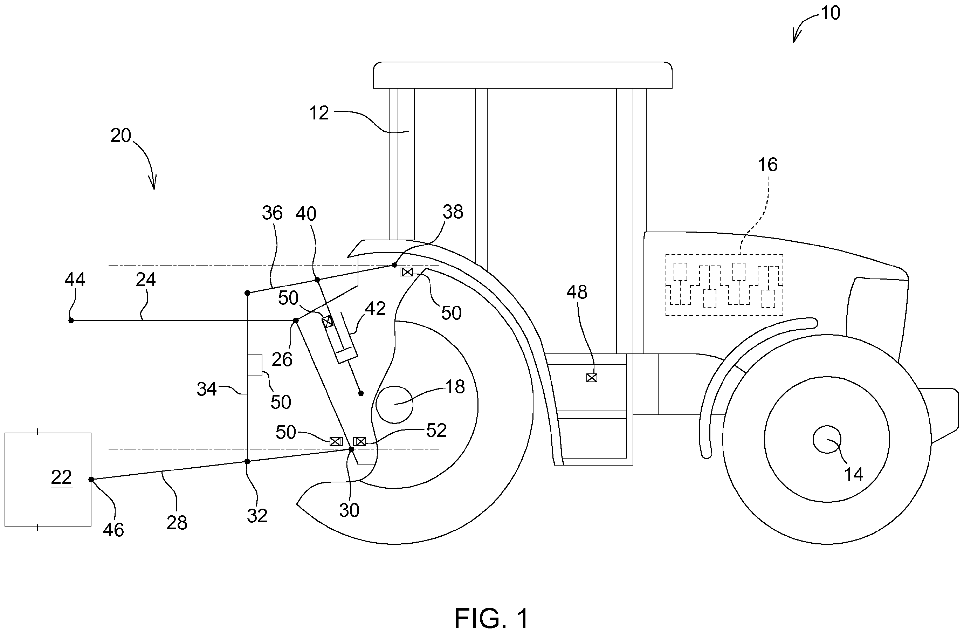

Die Figur 1 zeigt ein teilweise nur schematisch dargestelltes landwirtschaftliches Arbeitsfahrzeug 10 mit einer Kabine 12, einer Vorderachse 14 und einer Verbrennungskraftmaschine 16 zum Antrieb zumindest einer Hinterachse 18. An den Heckbereich des als Schlepper ausgebildeten Arbeitsfahrzeugs 10 ist ein nicht maßstabsgetreu und prinzipiell dargestellter Dreipunktkraftheber 20 angebracht. Von dem Dreipunktkraftheber 20 ist eine ebene Kinematik in der x-z-Ebene dargestellt. Der Dreipunktkraftheber 20 dient zum Heben beziehungsweise Tragen eines an ihm befestigten Anbaugeräts, welches vorliegend nicht dargestellt ist. Wie zuvor beschrieben können als Anbaugerät vielfältige Gerätschaften vorgesehen sein.

Der Dreipunktkraftheber 20 umfasst einen Oberlenker 24, der über eine Anlenkung 26 an dem Heckbereich des Schleppers gelenkig befestigt ist, und einen Unterlenker 28, der über eine Stützlager 30 ebenfalls an dem Heckbereich des Schleppers gelenkig befestigt ist. Der Unterlenker 28 ist über eine in einem Unterlenkergelenk 32 angreifende Hubspindel 34 mit dem einen Ende eines Hubarms 36 verbunden, der mit seinem anderen Ende über eine Anlenkung 38 gelenkig mit dem Schlepper verbunden ist. Der Hubarm 36 ist über einen in einem Hubarmgelenk 40 angreifenden und gegen den Schlepper abgestützten Hydraulikzylinder 42 gegenüber dem Schlepper verschwenkbar. Das Verschwenken des Hubarms 36 mittels des Hydraulikzylinders 42 wird über die Hubspindel 34 auf den Unterlenker 28 übertragen. Die Länge der Hubspindel 34 ist verstellbar, so dass Winkellagen des Hubarms 36 und des Unterlenkers 28 zueinander verstellt werden können. Oberlenker 24 und Unterlenker 28 weisen auf der von dem Schlepper angewandten Seite einen Oberlenkeranlenkpunkt 44 beziehungsweise einen Unterlenkeranlenkpunkt 46 zum Verbinden eines Anbaugerät auf. Die Anlenkung 26 und der Oberlenkeranlenkpunkt 44 können in vertikaler Richtung verstellt werden, so dass der Oberlenker 24 verschiedene vertikale Positionen zur Einstellung einer Masthöhe einnehmen kann. Auf eine Darstellung dieser Verstellmöglichkeit wird verzichtet.

Statt eines Anbaugeräts ist an den Unterlenker 28 des Dreipunktkrafthebers 20 ein eine definierte Nutzlast repräsentierendes Prüfgewicht 22 angehängt. Weiterhin ist dem Stützlager 30 eine Kraftmesseinrichtung 52 zugeordnet, mittels der in das Stützlager 30 eingeleitete Lagerlasten G gemessen werden können. Als Ausgangssignal infolge einer in das Stützlager eingeleiteten Last, gibt die Kraftmesseinrichtung 52 eine Ausgangsspannung aus. Diese Ausgangsspannung kann beispielsweise mit einem herkömmlichen Spannungsmessgerät zur Anzeige gebracht werden. Bevorzugt umfasst die Kraftmesseinrichtung einen Biegebolzen.

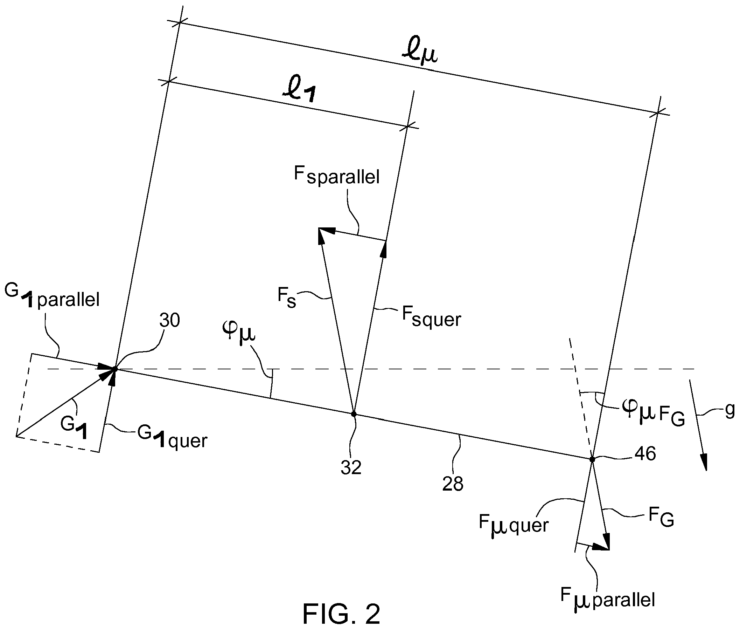

Figur 2 zeigt den Unterlenker 28 mit Kräften, die infolge eines im Unterlenkeranlenkpunkt 46 angehängten Prüfgewichts 22, wie in der Figur 1 dargestellt, an dem Unterlenker 28 angreifen und die in dem Stützlager 30 als Reaktionskräfte entstehen. Zunächst greift in dem Unterlenkeranlenkpunkt 46 die Gewichtskraft $F_G$ des Prüfgewichts 22 an, die bezogen auf den Unterlenker 28 in die Komponenten $F_{Uparallel}$ und $F_{Uquer}$ zerlegt werden kann. Bei nicht waagerecht ausgerichtetem Unterlenker 28 stellt sich zwischen der Gewichtskraft $F_G$ des Prüfgewichts 22 und der Kraftkomponente $F_{Uquer}$ ein Winkel $\varphi_{UFG}$ ein. Weiterhin greift an dem Unterlenkergelenk 32 die Stangenkraft $F_S$ der Hubspindel 34 an, die bezogen auf den Unterlenker 28 in die Komponenten $F_{Sparallel}$ und $F_{Squer}$ zerlegt werden kann. Als Reaktionskraft entsteht in dem Stützlager 30 die Lagerlast $G_1$, die bezogen auf den Unterlenker 28 in die Komponenten $G_{1parallel}$ und $G_{1quer}$ zerlegt werden kann.

Nach dem erfindungsgemäßen Verfahren wird ein funktionaler Zusammenhang zwischen den Ausgangsspannungen $U_L$ der Kraftmesseinrichtung 52 und den durch das angehängte Prüfgewicht 22 in das Stützlager 30 eingeleiteten Lagerlasten G hergestellt. Hierzu werden die Lagerlasten G bei zumindest zwei Winkelpositionen des Unterlenkers 28 berechnet. Eine Lagerlast $G_1$ bei einem bekannten Winkel $\varphi_u$ des Unterlenkers 28 wird berechnet nach der Gleichung

$$G_1 = \sqrt{(F_{\mathrm{Sparallel}} + F_{\mathrm{G}} * sin\varphi_{\mathrm{UFG}})^2 + (F_{\mathrm{G}} * cos\varphi_{\mathrm{UFG}} * \frac{l_{\mathrm{U}} - l_1}{l_1})^2}$$

bestimmt wird, wobei

| | |
|---|---|
| $F_{Sparallel}$ | die parallel zur dem Unterlenker 28 wirkenden Komponente der Stangenkraft $F_S$ der Hubspindel 34, |
| $F_G$ | der Betrag der Gewichtskraft $F_G$ der Nutzlast, |
| $\varphi_{UFG}$ | Winkel der Wirkungsrichtung der Gewichtskraft $F_G$ bezogen auf eine Senkrechte zu dem Unterlenker 28, |
| $l_u$ | Länge des Unterlenkers 28 in der x-z-Ebene und |
| $l_1$ | Abstand vom dem Stützlager 30 des Unterlenkers 28 zu dem Anlenkpunkt 32 der Hubspindel 34 an dem Unterlenker 28 sind. |

Hierbei wird die Komponente $F_{Sparallel}$ der Stangenkraft $F_S$ der Hubspindel 34 aus der bekannten Kinematik des Dreipunktkrafthebers 20 bestimmt, wobei folgende Parameter benötigt beziehungsweise gemessen werden:

$p_{Zyl}$ hydraulischer Druck im Hydraulikzylinder 42; gemessen mittels Sensormitteln 50 in Form eines Drucksensors im Hydraulikzylinder 42;

$\varphi_H$ Winkel des Hubarms 36 bezogen auf ein festes Koordinatensystem des Schleppers; gemessen mittels Sensormittel 50 in Form eines ersten Lagesensors;

$l_1$ Abstand zwischen Stützlager 30 und Unterlenkergelenk 32;

$l_2$ Länge der Hubspindel 34.

Weiterhin kann der Winkel $\varphi_u$ des Unterlenkers 28 bei variabler Länge der Hubspindel 24 unmittelbar mittels Sensormitteln 50 in Form eines zweiten Lagesensors bestimmt werden oder bei feststehender Länge der Hubspindel 24 ausgehend von dem Winkel $\varphi_H$ des Hubarms 36 über die kinematischen Beziehungen rechnerisch bestimmt werden. Indem von der Gewichtskraft $F_G$ des Prüfgewichts 22 die Wirkungsrichtung mittels auf dem Schlepper angeordneten Sensormitteln 48 bezogen auf den Schlepper bestimmt wird, kann der Winkel $\varphi_{UFG}$ bestimmt werden.

Bezugszeichenliste

10 landwirtschaftliches Arbeitsfahrzeug
12 Kabine
14 Vorderachse
16 Verbrennungskraftmaschine
18 Hinterachse
20 Dreipunktkraftheber
22 Anbaugerät
24 Prüfgewicht
26 Anlenkung

28 Unterlenker
30 Stützlager
32 Unterlenkergelenk
34 Hubspindel
36 Hubarm
38 Anlenkung
40 Hubarmgelenk
42 Hydraulikzylinder
44 Oberlenkeranlenkpunkt
46 Unterlenkeranlenkpunkt
48 Sensormittel
50 Sensormittel
52 Kraftmesseinrichtung

**Patentansprüche**

1. Verfahren zur Kalibrierung einer Kraftmesseinrichtung (52), mittels der eine Lagerlast $G_1$ in einem Stützlager (30) eines Unterlenkers (28) eines Dreipunktkrafthebers (20) eines landwirtschaftlichen Arbeitsfahrzeugs (10) bestimmbar ist,
bei dem gemessene Ausgangsspannungen $U_L$ der Kraftmesseinrichtung (52) und
in Abhängigkeit eines an den Unterlenker (28) angehängten und eine definierte Nutzlast repräsentierenden Gewichts (22) bei zumindest zwei Winkelpositionen des Unterlenkers (28) bestimmte Lagerlasten $G_1$
in einen funktionalen Zusammenhang gesetzt werden.

2. Verfahren nach Anspruch 1, **dadurch gekennzeichnet, dass** die Lagerlast $G_1$ mittels
des Betrags und der Wirkungsrichtung der Gewichtskraft $F_G$ des Gewichts (22),
der parallel zur dem Unterlenker (28) wirkenden Komponente der Stangenkraft $F_S$ einer Hubspindel (34) des Dreipunktkrafthebers (20) und
den Hebelverhältnissen des Unterlenkers (28) bezogen auf das Stützlager (30) bestimmt wird.

3. Verfahren nach Anspruch 2, **dadurch gekennzeichnet, dass** die Wirkungsrichtung der Gewichtskraft $F_G$ mittels eines Neigungssensors (48) bestimmt wird.

4. Verfahren nach Anspruch 2 oder 3, **dadurch gekennzeichnet, dass** die Lagerlast $G_1$ mittels der Gleichung

$$G_1 = \sqrt{(F_{\text{Sparallel}} + F_G * sin\varphi_{\text{UFG}})^2 + (F_G * cos\varphi_{\text{UFG}} * \frac{l_U - l_1}{l_1})^2}$$

bestimmt wird, wobei

$F_{\text{Sparallel}}$ die parallel zur dem Unterlenker (28) wirkenden Komponente der Stangenkraft $F_S$ der Hubspindel (34),
$F_G$ der Betrag der Gewichtskraft $F_G$ des Prüfgewichts (22),
$\varphi_{\text{UFG}}$ Winkel der Wirkungsrichtung der Gewichtskraft $F_G$ bezogen auf eine Senkrechte zu dem Unterlenker (28),
$l_U$ Länge des Unterlenkers (28) in der x-z-Ebene und
$l_1$ Abstand vom dem Stützlager (30) des Unterlenkers (28) zu dem Anlenkpunkt (32) der Hubspindel (34) an dem Unterlenker (28) sind.

5. Verfahren nach Anspruch 4, **dadurch gekennzeichnet, dass** die Komponente $F_{\text{Sparallel}}$, der Stangenkraft $F_S$ aus dem hydraulischen Druck in einem Hydraulikzylinder (42), der Winkelposition $\varphi_H$ des Hubarms (36), einem Abstand $l_1$ des Stützlagers (30) von einem Anlenkpunkt (32) der Hubspindel (34) an den Unterlenker (28) und der Länge $l_H$ der Hubspindel (34) ermittelt wird.

6. Verfahren nach Anspruch 5, **dadurch gekennzeichnet, dass** die Winkelposition $\varphi_H$ des Hubarms (36) mittels eines ersten Lagesensors (50) bestimmt wird.

7. Verfahren nach einem der Ansprüche 1 bis 6, **dadurch gekennzeichnet, dass** die Kraftmesseinrichtung (52) einen Kraftmessbolzen umfasst.

8. Verfahren nach einem der Ansprüche 1 bis 7, **dadurch gekennzeichnet, dass** die Winkelposition des Unterlenkers (28) mittels eines zweiten Lagesensors (50) bestimmt wird.

**Claims**

1. Method for calibrating a force measuring device (52), by means of which a bearing load $G_1$ in a supporting bearing (30) of a lower link (28) of a three-point hitch (20) of an agricultural working vehicle (10) can be determined, in which measured output voltages $U_L$ of the force measuring device (52) and bearing loads $G_1$ which are determined at at least two angular positions of the lower link (28) as a function of a weight (22) which is coupled to the lower link (28) and represents a defined payload are placed in a functional relationship.

2. Method according to Claim 1, **characterized in that** the bearing load $G_1$ is determined by means of the absolute value and the direction of action of the weight force $F_G$ of the weight (22), the component of the rod force $F_S$, acting parallel to the lower link (28), of a lifting spindle (34) of the three-point hitch (20), and the lever ratios of the lower link (28) with respect to the supporting bearing (30).

3. Method according to Claim 2, **characterized in that** the direction of action of the weight force $F_G$ is determined by means of an inclination sensor (48).

4. Method according to Claim 2 or 3, **characterized in that** the bearing load $G_1$ is determined by means of the equation

$$G_1 = \sqrt{(F_{Sparallel} + F_G * sin\varphi_{UFG})^2 + (F_G * cos\varphi_{UFG} * \frac{l_U - l_1}{l_1})^2}$$

where

$F_{Sparallel}$ is the component, acting parallel to the lower link (28), of the rod force $F_S$ of the lifting spindle (34),
$F_G$ is the absolute value of the weight force $F_G$ of the testing weight (22),
$\varphi_{UFG}$ is the angle of the direction of action of the weight force $F_G$ with respect to a perpendicular with respect to the lower link (28),
$l_u$ is the length of the lower link (28) in the x-z plane, and
$l_1$ is the distance from the supporting bearing (30) of the lower link (28) with respect to an articulation point (32) of the lifting spindle (34) on the lower link (28)

5. Method according to Claim 4, **characterized in that** the component $F_{Sparallel}$ of the rod force $F_S$ is ascertained from the hydraulic pressure in a hydraulic cylinder (42), the angular position $\varphi_H$ of the lifting arm (36), a distance $l_1$ of the supporting bearing (30) from an articulation point (32) of the lifting spindle (34) to the lower link (28) and the length $l_H$ of the lifting spindle (34).

6. Method according to Claim 5, **characterized in that** the angular position $\varphi_H$ of the lifting arm (36) is determined by means of a first position sensor (50).

7. Method according to one of Claims 1 to 6, **characterized in that** the force measuring device (52) comprises a force measuring bolt.

8. Method according to one of Claims 1 to 7, **characterized in that** the angular position of the lower link (28) is determined by means of a second position sensor (50).

**Revendications**

1. Procédé d'étalonnage d'un dispositif de mesure de force (52), au moyen duquel il est possible de déterminer une charge de palier $G_1$ dans un palier de support (30) d'un attelage inférieur (28) d'un dispositif de levage à trois points (20) d'un véhicule agricole (10),
dans lequel des tensions de sortie mesurées $U_L$ du dispositif de mesure de force (52) et
des charges de palier $G_1$ déterminées pour au moins deux positions angulaires de l'attelage inférieur (28) en fonction d'un poids (22) porté par l'attelage inférieur (28) et représentant une charge utile définie,
sont liées par une relation fonctionnelle.

2. Procédé selon la revendication 1, **caractérisé en ce que** la charge de palier $G_1$ est déterminée au moyen de la valeur et de la direction d'action de la force pondérale $F_G$ du poids (22),
de la composante agissant parallèlement à l'attelage inférieur (28) de la force s'exerçant de tige $F_S$ d'une tige de levage (34) du dispositif de levage à trois points (20), et
des rapports de leviers de l'attelage inférieur (28) par rapport au palier de support (30).

3. Procédé selon la revendication 2, **caractérisé en ce que** la direction d'action de la force pondérale $F_G$ est déterminée au moyen d'un capteur d'inclinaison (48).

4. Procédé selon la revendication 2 ou 3, **caractérisé en ce que** la charge de palier $G_1$ est déterminée conformément à l'équation suivante :

$$G_1 = \sqrt{\left(F_{Sparallel} + F_G * \sin\varphi_{UFG}\right)^2 + \left(F_G * \cos\varphi_{UFG} * \frac{l_U - l_1}{l_1}\right)^2}$$

où

$F_{Sparallel}$ est la composante de la force de tige $F_S$ de la tige de levage (34), agissant parallèlement à l'attelage inférieur (28),
$F_G$ est la valeur de la force pondérale $F_G$ du poids de test (22),
$\varphi_{UFG}$ est l'angle de la direction d'action de la force pondérale $F_G$ par rapport à une verticale à l'attelage inférieur (28),
$l_u$ est la longueur de l'attelage inférieur (28) dans le plan x-z, et
$l_1$ est la distance du palier de support (30) de l'attelage inférieur (28) au point d'articulation (32) de la tige de levage (34) au niveau de l'attelage inférieur (28).

5. Procédé selon la revendication 4, **caractérisé en ce que** la composante $F_{Sparallel}$ de la force de tige $F_S$ est déterminée à partir de la pression hydraulique s'exerçant dans un vérin hydraulique (42), de la position angulaire $\varphi_H$ du bras de levage (36), d'une distance $l_1$ du palier de support (30) par rapport à un point d'articulation (32) de la broche de levage (34) au niveau de l'attelage inférieur (28) et de la longueur $l_H$ de la tige de levage (34).

6. Procédé selon la revendication 5, **caractérisé en ce que** la position angulaire $\varphi_H$ du bras de levage (36) est déterminée au moyen d'un premier capteur de position (50).

7. Procédé selon l'une quelconque des revendications 1 à 6, **caractérisé en ce que** le dispositif de mesure de force (52) est un goujon dynamométrique.

8. Procédé selon l'une quelconque des revendications 1 à 7, **caractérisé en ce que** la position angulaire de l'attelage inférieur (28) est déterminée au moyen d'un second capteur de position (50).

FIG. 1

FIG. 2

EP 2 946 647 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0407705 A1